# EUROPEAN PATENT APPLICATION

(11) **EP 4 769 759 A1**
(43) Date of publication of application: **01.07.2026**
(21) Application number: 24945741.7
(22) Date of filing: 08.11.2024
(51) Int. Cl.: H01M 50/358, H01M 50/383, H01M 50/342, H01M 50/296

(54) **BATTERY PACK**

(30) Priority: 19.06.2024 KR 20240079882
(71) Applicant: LG Energy Solution, Ltd., Seoul 07335 (KR)
(72) Inventor: CHANG, Hyuk-Kyun, Daejeon 34122 (KR); KIM, Soo-Youl, Daejeon 34122 (KR); PARK, Gi-Chan, Daejeon 34122 (KR)
(74) Representative: BCKIP Part mbB
(86) International application number: PCT/KR2024/017598
(87) International publication number: WO 2025/263696

(57) **Abstract**

Disclosed is a battery pack. A battery pack according to an embodiment of the present disclosure may include: a case configured to provide a space therein; a battery module positioned inside the case and including a rear end cover having a venting hole; and a venting channel including a body configured to provide a space therein and communicating with the venting hole, and a guide positioned inside the body and facing the venting hole.

## Description

### TECHNICAL FIELD

The present disclosure relates to a battery pack.

This application is based on and claims priority from Korean Patent Application No. 10-2024-0079882, filed on June 19, 2024, with the Korean Intellectual Property Office, the disclosure of which is incorporated herein in its entirety by reference.

### BACKGROUND ART

As the demand for portable electronic products such as smartphones, tablet PCs, and smart watches increases significantly, and as electric vehicles become widespread, active research on batteries mounted to them, especially secondary batteries capable of being repeatedly charged and discharged, is underway.

Currently commercialized secondary batteries include nickel-cadmium batteries, nickel-hydrogen batteries, nickel-zinc batteries, lithium secondary batteries, and the like. Among of them, lithium secondary batteries are in the spotlight for their advantages of free charging and discharging due to almost no memory effect, a very low self-discharge rate, and a high energy density, compared to nickel-based secondary batteries.

These lithium secondary batteries use lithium-based oxides and carbon materials as positive and negative electrode active materials, respectively. The lithium secondary batteries include an electrode assembly in which positive and negative electrode plates, which are coated with the positive and negative electrode active materials, respectively, are disposed with a separator therebetween, and an exterior case, i.e., a battery case, that stores and seals the electrode assembly with an electrolyte.

In general, lithium secondary batteries may be classified, depending on the shape of the exterior case, into can-type secondary batteries in which the electrode assembly is stored in a metal can and pouch-type secondary batteries in which the electrode assembly is stored in a pouch of an aluminum laminate sheet.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case to form a battery module. In this case, each secondary battery included in the battery module may be referred to as a battery cell. In addition, multiple battery modules may be connected to form a battery pack.

However, in the case where a battery pack includes multiple battery modules therein and where each battery module includes multiple battery cells, it may be vulnerable to a chain thermal reaction between the battery modules or between the battery cells. For example, if an event such as thermal runaway occurs inside one battery module, the thermal runaway needs to be prevented from transferring to other battery modules or other battery cells. If the propagation of thermal runaway between the battery modules or battery cells fails to be properly suppressed, an event occurring in a specific battery module or battery cell may cause a chain thermal reaction in other battery modules or other battery cells, leading to explosion or fire and worsening the same.

In particular, if an event such as thermal runaway occurs in any one battery module, gas or flame may be randomly discharged to the outside. In this case, if the discharge of gas or flame is not properly controlled, the gas or flame will be discharged to other battery modules, causing a chain thermal reaction in other battery modules. In particular, a module terminal may be provided on the front side of the battery module, and for example, a configuration, such as a module bus-bar, to be electrically connected to another battery module or battery pack may be provided thereon. Therefore, if flame is discharged toward the front of the battery module, the module terminal may be damaged in the battery pack, causing electrical short circuits. In addition, other battery modules may exist in front of a battery module, so if flame is discharged toward the front of a specific battery module, the discharged flame may head to another battery module, making it easy for fire to spread through the battery modules.

If thermal propagation between the battery modules or battery cells is not properly controlled, the voltage of the battery module or battery pack may rapidly drop. In addition, this may cause sudden interruption of devices equipped with the battery modules or battery packs, resulting in unexpected damage. For example, if the voltage suddenly drops in the battery pack while the electric vehicle is driving, it is impossible to secure enough time to move the electric vehicle to a safe location.

In addition, if fire or explosion suddenly occurs due to failure to properly control thermal propagation between the battery modules or battery cells, the users are more likely to be injured. For example, when thermal runaway occurs in an electric vehicle, if enough time fails to be secured until a full-scale fire develops, occupants may not be able to escape safely.

### DISCLOSURE

### Technical Problem

The present disclosure is designed to solve the problems of the related art, and therefore the present disclosure is directed to providing a battery pack with an improved structure capable of appropriately controlling the discharge of flames and the like generated inside the battery module, and a vehicle including the same.

The present disclosure is also to provide a structure capable of preventing damage to the exterior of the battery pack when a thermal event occurs.

The present disclosure aims to prevent flames or ignitable particles from being released to the outside of the battery pack when a thermal event occurs.

In addition, the present disclosure is to provide a structure capable of suppressing thermal propagation between battery modules.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a case configured to provide a space therein; a battery module positioned inside the case and including a rear end cover having a venting hole; and a venting channel including a body configured to provide a space therein and communicating with the venting hole, and a guide positioned inside the body and facing the venting hole.

In addition, the guide may extend in an up-down direction, and may be configured to partition the space of the body.

In addition, the body may include: an inlet facing the venting hole; and an outlet formed on an upper surface.

In addition, the case may include a pack cover configured to cover an upper surface of the battery module, and the outlet may face the pack cover.

In addition, the guide may be disposed to be inclined with respect to the venting hole.

In addition, a plurality of guides may be provided, and the plurality of guides may be disposed in the left-right direction.

In addition, the plurality of guides may partition the space provided by the body into a plurality of venting spaces, and each of the plurality of venting spaces may have an inlet facing the rear end cover.

In addition, each of the plurality of guides may be disposed to be inclined with respect to the rear end cover.

In addition, each of the plurality of guides may face a neighboring guide.

In addition, the battery module may further include a fireproof sheet positioned on the inner side of the rear end cover and configured to cover the venting hole.

In addition, the case may include: a base plate on which the battery module is installed; and a side wall installed on the base plate, and the venting channel may be disposed between the rear end cover and the side wall.

In addition, the venting channel may be fastened to the rear end cover.

In addition, the battery module may further include a power terminal protruding forward.

In another aspect of the present disclosure, there is provided a vehicle including a battery pack of the present disclosure.

### Advantageous Effects

According to at least one of the embodiments of the present disclosure, when gas or flame occurs inside a battery module, it is possible to appropriately control the discharge of such gas or flame.

According to at least one of the embodiments of the present disclosure, it is possible to prevent damage to the exterior of a battery pack even when a thermal event occurs.

According to at least one of the embodiments of the present disclosure, electrical safety of a battery pack is able to be improved.

According to at least one of the embodiments of the present disclosure, thermal propagation between battery modules is able to be suppressed when a thermal event occurs.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating a battery pack according to an embodiment of the present disclosure.
FIG. 2 is a partially exploded perspective view of the battery pack in FIG. 1.
FIG. 3 is a drawing illustrating the battery module in FIG. 2.
FIG. 4 is a partially exploded perspective view of the battery module in FIG. 3.
FIG. 5 is an enlarged view of part C in FIG. 4.
FIG. 6 is a drawing illustrating the configuration shown in FIG. 5 when viewed in a different direction.
FIG. 7 is a drawing illustrating a modification of the embodiment in FIG. 6.
FIGS. 8 and 9 are drawings illustrating the venting channel in FIG. 2.
FIG. 10 and FIG. 11 are drawings illustrating the combination of the venting channel and the battery module in FIG. 2.
FIG. 12 is a cross-sectional view illustrating the configuration taken along line B-B' in FIG. 1.
FIG. 13 is a drawing illustrating operation of the configuration in FIG. 12 when a thermal event occurs.
FIG. 14 is a cross-sectional view illustrating the configuration taken along line A-A' in FIG. 1.
FIG. 15 is a drawing illustrating operation of the configuration in FIG. 14 when a thermal event occurs.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

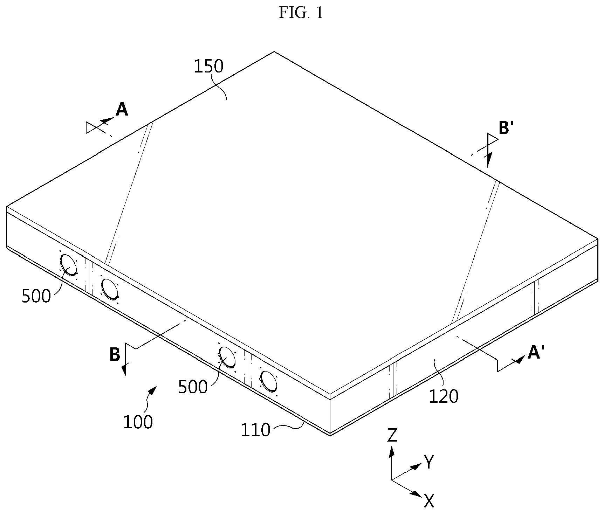

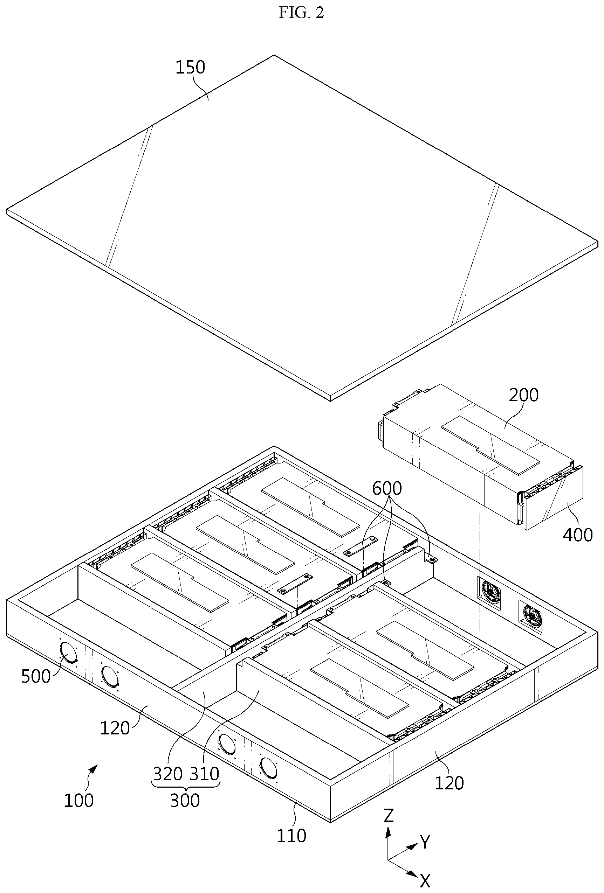

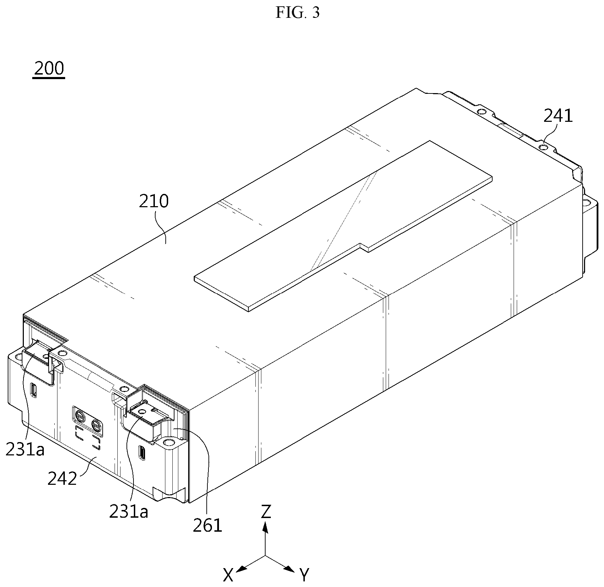

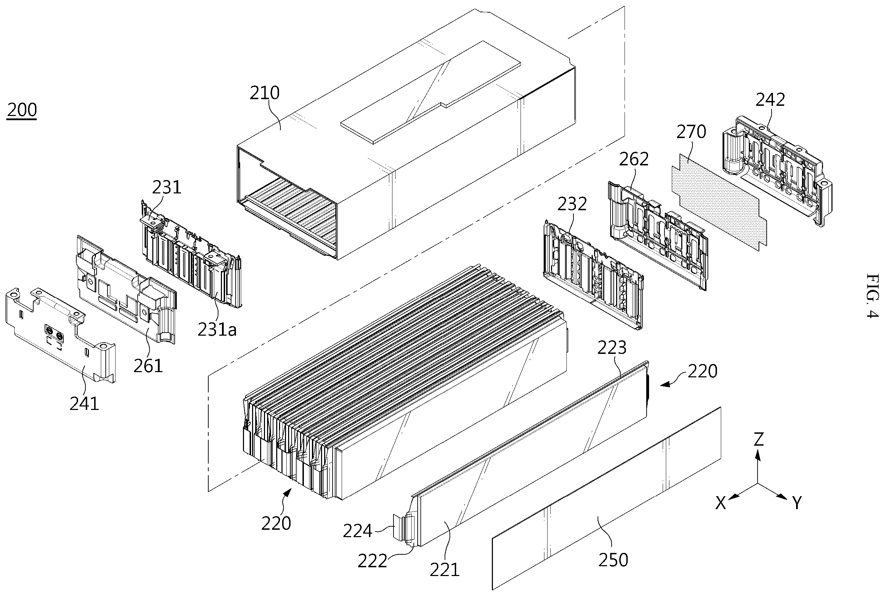

FIG. 1 is a drawing illustrating a battery pack according to an embodiment of the present disclosure. FIG. 2 is a partially exploded perspective view of the battery pack in FIG. 1. FIG. 3 is a drawing illustrating the battery module 200 in FIG. 2. FIG. 4 is a partially exploded perspective view of the battery module 200 in FIG. 3. Referring to FIGS. 1 to 4, a battery pack according to an embodiment of the present disclosure may include a case 100, a battery module 200, and a venting channel 400.

The case 100 may provide a space therein. The case 100 may include a base plate 110, a side wall 120, and a pack cover 150. The base plate 110 may have a rectangular shape. The base plate 110 may have a flat shape. The base plate 110 may form the appearance of the battery pack. The base plate 110 may provide an inner space of the battery pack.

The pack cover 150 may be configured as a rectangular plate. The pack cover 150 may be configured as a flat plate. The pack cover 150 may form the appearance of the battery pack. The pack cover 150 may cover the inner space of the battery pack.

The battery module 200 may be positioned inside the case 100. In addition, the battery module 200 may include a plurality of battery cells 220. In addition, the battery module 200 may include a rear end cover 242. The rear end cover 242 may include a third venting hole 242a. A plurality of battery modules 200 may be provided.

The venting channel 400 may include a body 410 and a guide 420. The body 410 may provide a space therein. In addition, the body 410 may be in communication with the third venting hole 242a. The guide 420 may face the third venting hole 242a. The guide 420 may guide the flow of venting gas G discharged from the third venting hole 242a.

According to this configuration of the present disclosure, the thermal safety of the battery pack may be improved. When a thermal event occurs in the battery module 200, the venting gas G and ignitable particles F may be discharged through the third venting hole 242a. In this case, the venting gas G and the ignitable particles F may collide with the guide 420. The ignitable particles F may fall down after colliding with the guide 420 due to a decrease in energy. This prevents the ignitable particles F from moving inside the battery pack to transfer heat. In addition, the venting gas G may have its energy reduced after colliding with the guide 420 and then move upward. The reduction in the energy of the venting gas G may prevent damage to the case 100 by the venting gas G. In addition, as the venting gas G moves upward, the venting gas G may be prevented from flowing into the battery module 200. Therefore, the propagation of a thermal event may be suppressed.

Referring to FIGS. 1 to 4, a battery pack according to an embodiment of the present disclosure may include partition walls 300 and a venting device 500. The partition walls 300 may include a first partition wall 310 and a second partition wall 320. A plurality of partition walls 300 may be provided. The partition walls 300 may be installed, fastened, fixed, coupled, or attached to the upper surface of the base plate 110. The partition walls 300 may partition the inner space of the battery pack. The battery module 200 or battery cell 220 may be located in the spaces partitioned by the partition walls 300.

The venting device 500 may be installed on the side wall 120. For example, the venting device 500 may be installed on the front side wall 120. For example, the venting device 500 may be a gas valve. The venting device 500 may be opened when the pressure inside the case 100 increases, thereby discharging gas. In addition, the venting device 500 may block external air from flowing into the case 100. A plurality of venting devices 500 may be provided.

Referring to FIGS. 1 to 4, a battery pack according to an embodiment of the present disclosure may include a plurality of battery modules 200. The battery module 200 may include a module case 210, a plurality of battery cells 220, a pad 250, a front bus-bar frame assembly 231, a rear bus-bar frame assembly 232, a front insulating cover 261, a rear insulating cover 262, a front end cover 241, and a rear end cover 242.

The module case 210 may have a rectangular shape. The module case 210 may provide a space therein. The module case 210 may have a top plate, a bottom plate, and a pair of side plates. In addition, the module case 210 may have front and rear openings.

The battery cell 220 may be accommodated inside the module case 210. A plurality of battery cells 220 may be stacked in the left-right direction or the Y-axis direction. The battery cell 220 may include a storage portion 221 having an electrode assembly, a first sealing portion 222 protruding from the front and rear sides of the storage portion 221, and a second sealing portion 223 protruding from the upper side of the storage portion 221. In addition, the battery cell 220 may include electrode leads 224 protruding from the front and rear sides of the first sealing portion 222, respectively. Each battery cell 220 may extend in the front-back direction or the X-axis direction. The electrode leads 224 may protrude toward the front and rear of each battery cell 220.

The battery cell 220 may be a secondary battery. In particular, the battery cell 220 may be a pouch-type secondary battery. However, the battery cell 220 is not limited to the pouch type, and may have various shapes such as a cylindrical shape or a cuboid shape. A plurality of battery cells 220 may be provided.

The pads 250 may be disposed between the plurality of battery cells 220. The pads 250 may be disposed between at least some battery cells 220 and/or on the outer side of the stack. For example, the pads 250 may be configured to be disposed between every four battery cells 220 stacked in the left-right direction.

The pad 250 may include an elastic material so as to absorb swelling of the battery cell 220. For example, the pad 250 may be made of a foam material such as polyurethane. Alternatively, the pad 250 may include a material capable of blocking heat or flame. For example, the pad 250 may include an insulating or fireproof material such as silicon or mica.

The front bus-bar frame assembly 231 may be provided at the front of the plurality of battery cells 220. The front bus-bar frame assembly 231 may be electrically connected to the electrode leads 224 on the front side of the plurality of battery cells 220.

The rear bus-bar frame assembly 232 may be provided at the rear of the plurality of battery cells 220. The rear bus-bar frame assembly 232 may be electrically connected to the electrode leads 224 on the rear side of the plurality of battery cells 220.

The front end cover 241 may be coupled to the front side of the module case 210. The front end cover 241 may cover the front surface of the module case 210. The front end cover 241 may have a rectangular shape.

The rear end cover 242 may be coupled to the rear side of the module case 210. The rear end cover 242 may cover the rear surface of the module case 210. The rear end cover 242 may have a rectangular shape.

The front insulating cover 261 may be positioned between the front end cover 241 and the front bus-bar frame assembly 231. The front insulating cover 261 may electrically insulate the front bus-bar frame assembly 231 and the front end cover 241 from each other.

The rear insulating cover 262 may be positioned between the rear end cover 242 and the rear bus-bar frame assembly 232. The rear insulating cover 262 may electrically insulate the rear bus-bar frame assembly 232 and the rear end cover 242 from each other.

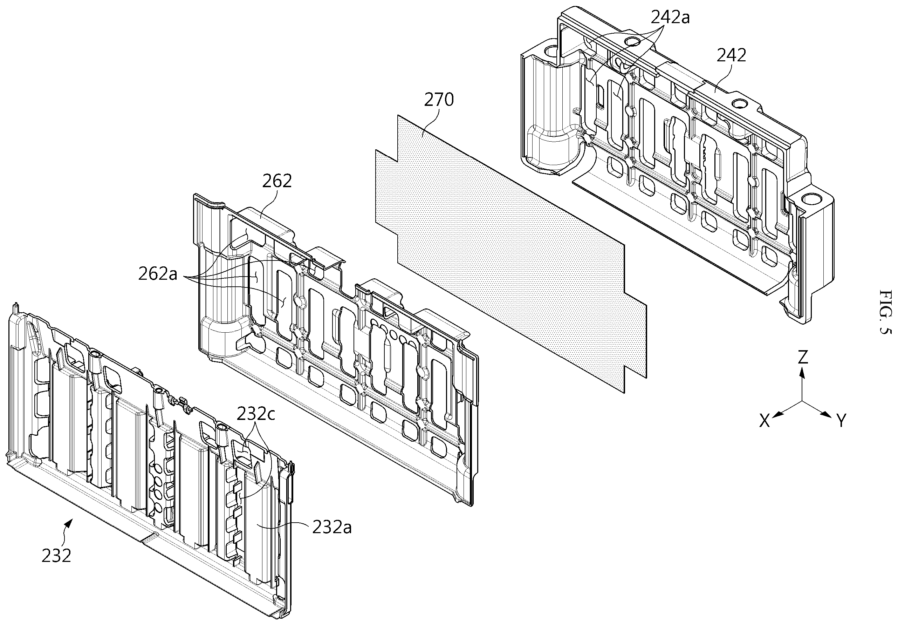

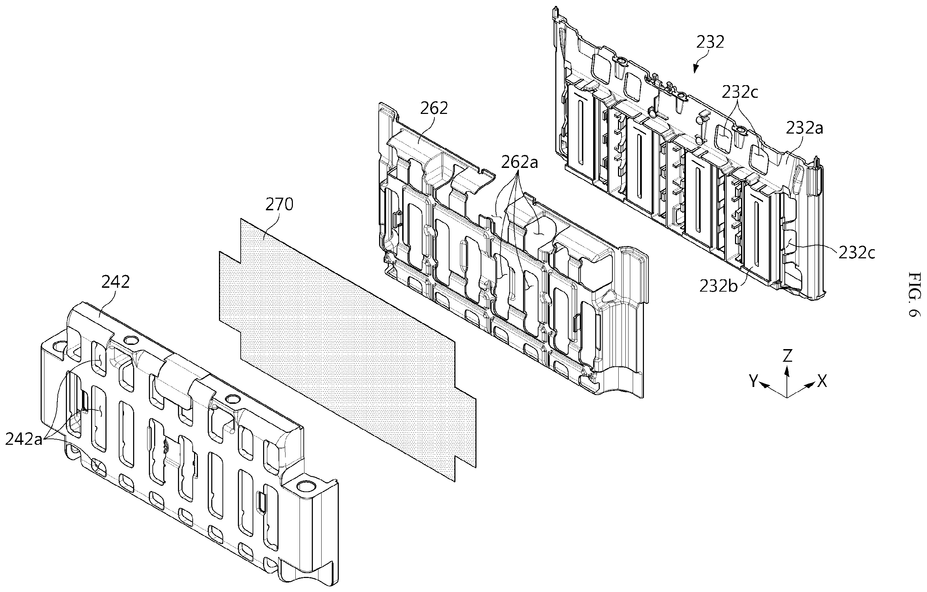

FIG. 5 is an enlarged view of part C in FIG. 4. FIG. 6 is a drawing illustrating the configuration shown in FIG. 5 when viewed in a different direction. Referring to FIGS. 3 to 6, the rear bus-bar frame assembly 232 according to an embodiment of the present disclosure may include a frame 232a and a bus-bar 232b. The bus-bar 232b may be installed on the frame 232a. The bus-bar 232b may be electrically connected to the rear electrode leads 224 of the plurality of battery cells 220. A plurality of bus-bars 232b may be provided. The plurality of bus-bars 232b may be disposed in the left-right direction or the Y-axis direction. In addition, the frame 232a may have a first venting hole 232c. The first venting hole 232c may be a through-hole. The first venting hole 232c may face the first sealing portion 222 on the rear side of the battery cell 220. A plurality of first venting holes 232c may be provided. Some of the plurality of first venting holes 232c may be disposed between two adjacent bus-bars 232b.

According to this configuration of the present disclosure, the venting gas G and ignitable particles F generated inside the battery module 200 may be discharged to the rear of the battery module 200 through the first venting hole 232c.

Referring to FIGS. 3 to 6, the battery module 200 according to an embodiment of the present disclosure may include a power terminal 231a that protrudes forward. The power terminal 231a may be provided in the front bus-bar frame assembly 231. In addition, the power terminal 231a may protrude from the front bus-bar assembly 231. A pair of power terminals 231a may be provided. The power terminal 231a may be exposed to the outside of the battery module 200.

In addition, the power terminal 231a may be electrically connected to a power terminal 231a of a neighboring battery module 200. The inter bus-bar 600 may electrically connect the neighboring battery modules 200 with each other.

According to this configuration of the present disclosure, the thermal safety of the battery pack may be improved. Primary components such as the power terminal 231a, the control terminal, and the inter bus-bar 600 may be disposed on the front side of the battery module 200. Since the venting gas G and the ignitable particles F are discharged to the rear of the battery module 200, damage to the front side of the battery module 200 may be minimized. Since damage to the front side of the battery module 200 is minimized, propagation of a thermal event to the neighboring battery modules 200 may be suppressed.

Referring to FIGS. 3 to 6, the rear insulating cover 262 of the battery pack according to an embodiment of the present disclosure may have a second venting hole 262a. The second venting hole 262a may be a through-hole. The second venting hole 262a may face the rear bus-bar frame assembly 232 or the first venting hole 232c. In addition, the second venting hole 262a may be in communication with the first venting hole 232c. A plurality of second venting holes 262a may be provided. The plurality of second venting holes 262a may be in communication with the plurality of first venting holes 232c.

Referring to FIGS. 3 to 6, the battery module 200 of the battery pack according to an embodiment of the present disclosure may further include a fireproof sheet 270. The fireproof sheet 270 may include a material having high heat resistance or fire resistance. The fireproof sheet 270 may be positioned on the inner side of the rear end cover 242. In addition, the fireproof sheet 270 may be located between the rear end cover 242 and the rear insulating cover 262. In addition, the fireproof sheet 270 may be fixed between the rear end cover 242 and the rear insulating cover 262.

The fireproof sheet 270 may be positioned between the third venting hole 242a and the second venting hole 262a. The fireproof sheet 270 may cover a plurality of third venting holes 242a and a plurality of second venting holes 262a.

According to this configuration of the present disclosure, the thermal safety of the battery pack may be improved. When a thermal event occurs, the internal pressure of the module case 210 may increase due to the venting gas G and the ignitable particles F. As a result, a part of the fireproof sheet 270 may be ruptured. Due to the rupture of the fireproof sheet 270, some of the second venting holes 262a and some of the third venting holes 242a may be connected, so that the venting gas G and the ignitable particles F may be discharged. In addition, the unruptured portion of the fireproof sheet 270 may still cover the remaining second venting holes 262a and the remaining third venting holes 242a. Therefore, the venting gas G and the ignitable particles F discharged to the outside of the battery module 200 may be blocked from flowing into the battery module 200.

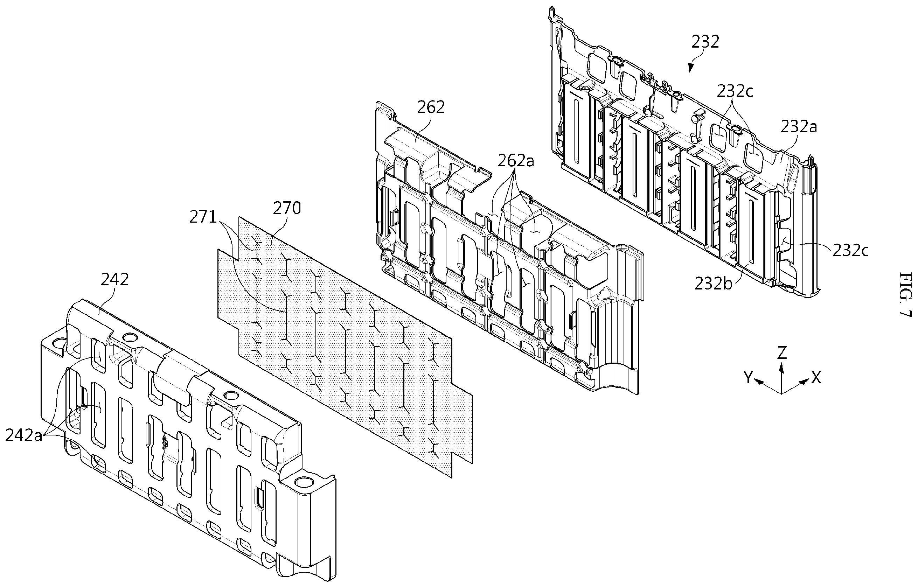

FIG. 7 is a drawing illustrating a modification of the embodiment in FIG. 6. Referring to FIG. 7, the fireproof sheet 270 according to an embodiment of the present disclosure may have a score line 271. The score line 271 may refer to a configuration that encompasses a perforated line 271, a notching line 271, a cutting line 271, a shredding line 271, a tear line 271, and a separation line 271. The score line 271 may be configured to be easily broken by pressure applied to the fireproof sheet 270.

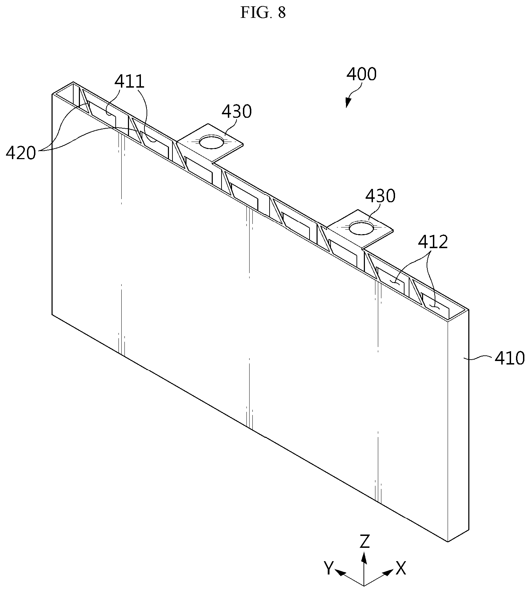

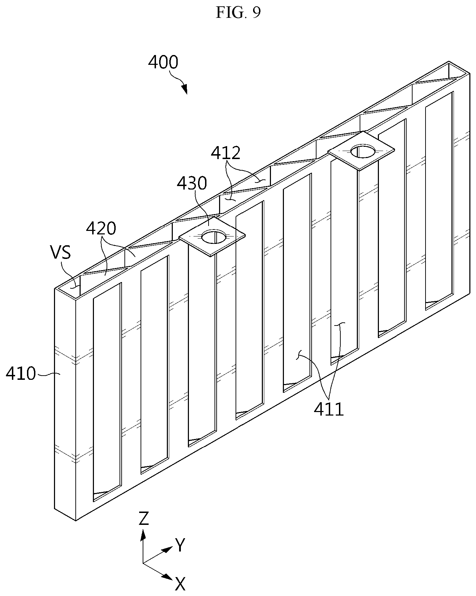

FIGS. 8 and 9 are drawings illustrating the venting channel 400 in FIG. 2. Referring to FIGS. 8 and 9, the guide 420 of the venting channel 400 according to an embodiment of the present disclosure may extend in the up-down direction or the Z-axis direction. In addition, the guides 420 may partition the inner space of the body 410.

According to this configuration of the present disclosure, the thermal safety of the battery pack may be improved. Since the guides 420 partition the inner space of the body 410, the venting gas G and ignitable particles F flowing into one space may be blocked from flowing into another space. Therefore, the propagation of the thermal event may be suppressed.

Referring to FIGS. 8 and 9, the body 410 of the venting channel 400 according to an embodiment of the present disclosure may have an inlet 411 and an outlet 412. The inlet 411 may face the third venting hole 242a. Alternatively, the inlet 411 may be in communication with the third venting hole 242a. The inner space of the body 410 may be in communication with the third venting hole 242a through the inlet 411. The outlet 412 may be formed on the upper surface of the body 410.

According to this configuration of the present disclosure, the thermal safety of the battery pack may be improved. The venting gas G and the ignitable particles F introduced into the venting channel 400 through the inlet 411 may collide with the interior of the body 410 and the guide 420. At this time, the ignitable particles F may lose energy and fall down. On the other hand, the venting gas G may be discharged in the upward direction or the +Z-axis direction through the outlet 412. As a result, the venting gas G and the ignitable particles F may be prevented from flowing into other inner spaces of the venting channel 400 or into the battery modules 200.

Referring to FIGS. 8 and 9, the guide 420 of the venting channel 400 according to an embodiment of the present disclosure may be disposed to be inclined with respect to the third venting hole 242a. In addition, the guide 420 may be disposed to be inclined with respect to the inlet 411. In addition, the guide 420 may be disposed to be inclined with respect to the X-Z plane.

According to this configuration of the present disclosure, the venting gas G and the ignitable particles F introduced into the venting channel 400 through the inlet 411 may collide with the inclined guide 420 and then flow in the left-right direction or the Y-axis direction. In addition, the venting gas G and the ignitable particles F may further collide with the interior of the body 410. As a result, the energy of the venting gas G and the ignitable particles F may be further reduced. In addition, since the flow direction of the venting gas G and the ignitable particles F is changed, the venting gas G and the ignitable particles F may be prevented from flowing into the battery module 200.

Referring to FIGS. 8 and 9, the guide 420 of the venting channel 400 according to an embodiment of the present disclosure may be provided in multiples, and the multiple guides 420 may be arranged in the left-right direction or the Y-axis direction.

The multiple guides 420 may partition the inner space of the body 410 into multiple spaces. In this case, each partitioned space may be referred to as a venting space VS. In addition, each venting space VS may have one or more inlets 411. In addition, each venting space VS may have one or more outlets 412.

According to this configuration of the present disclosure, the thermal safety of the battery pack may be improved. The plurality of venting spaces VS may further reduce the size of the space through which the venting gas G and the ignitable particles F may spread. Therefore, the propagation of a thermal event may be more strongly suppressed.

Referring to FIGS. 8 and 9, the plurality of guides 420 of the venting channel 400 according to an embodiment of the present disclosure may be disposed to be inclined with respect to the rear end cover 242, respectively. In addition, the plurality of guides 420 may be disposed to be inclined with respect to the inlet 411, respectively. In addition, the plurality of guides 420 may be disposed to be inclined with respect to the third venting hole 242a, respectively. In addition, the plurality of guides 420 may be disposed to be inclined with respect to the X-Z plane, respectively.

In this case, the respective guides 420 may be disposed to be inclined in the same direction.

According to this configuration of the present disclosure, the venting gas G and the ignitable particles F introduced into one venting space VS through the inlet 411 may collide with the inclined guide 420 and flow in the left-right direction or the Y-axis direction. Then, they may further collide with the guide 420 of the neighboring venting space VS. As a result, the energy of the venting gas G and the ignitable particles F may be further reduced, thereby preventing the venting gas G and the ignitable particles F from flowing into the battery module 200.

Referring to FIGS. 8 and 9, each of the plurality of guides 420 of the venting channel 400 according to an embodiment of the present disclosure may face the neighboring guide 420. Each venting space VS may be surrounded by the body 410 and one or more guides 420.

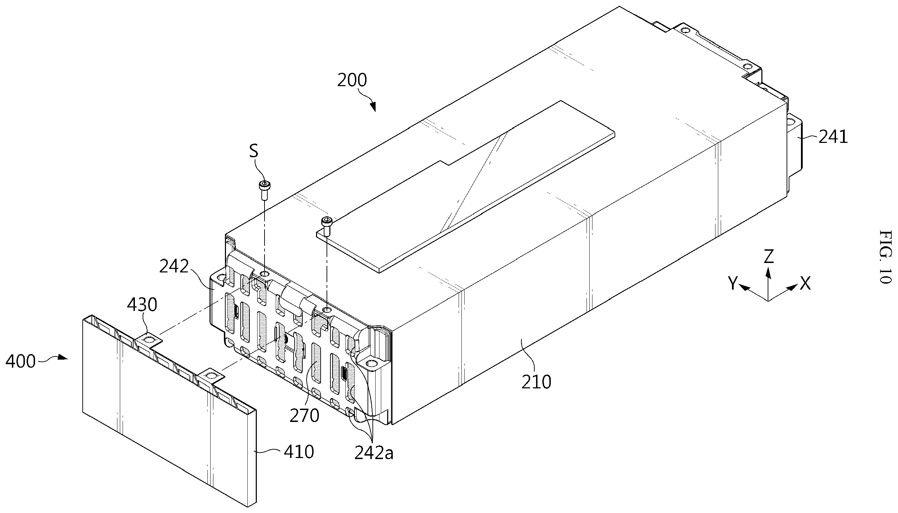

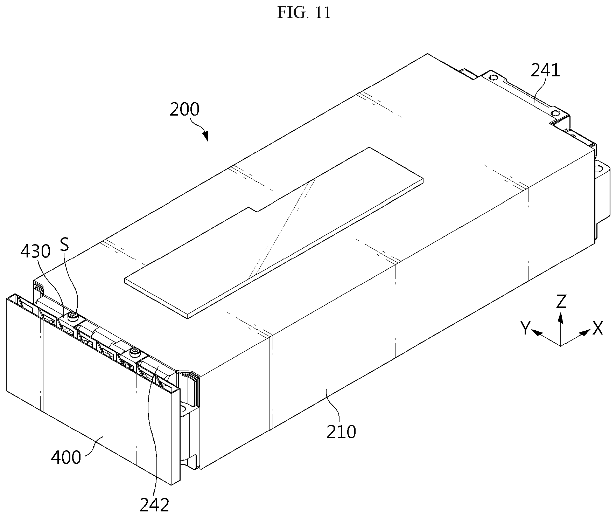

FIG. 10 and FIG. 11 are drawings illustrating the combination of the venting channel 400 and the battery module 200 in FIG. 2. Referring to FIG. 10 and FIG. 11, the venting channel 400 according to an embodiment of the present disclosure may be fastened, coupled, fixed, or attached to the rear end cover 242. The venting channel 400 may have a fastening portion 430 protruding forward or in the +X-axis direction from the body 410. The fastening portion 430 may be formed integrally with the body 410.

In addition, the fastening portion 430 and the rear end cover 242 may be fastened through a fastening member S.

According to this configuration of the present disclosure, the venting channel 400 may be stably coupled to the rear end cover 242. Therefore, even if venting gas G or ignitable particles F are discharged, the venting channel 400 may remain in the stable connection with the battery module 200.

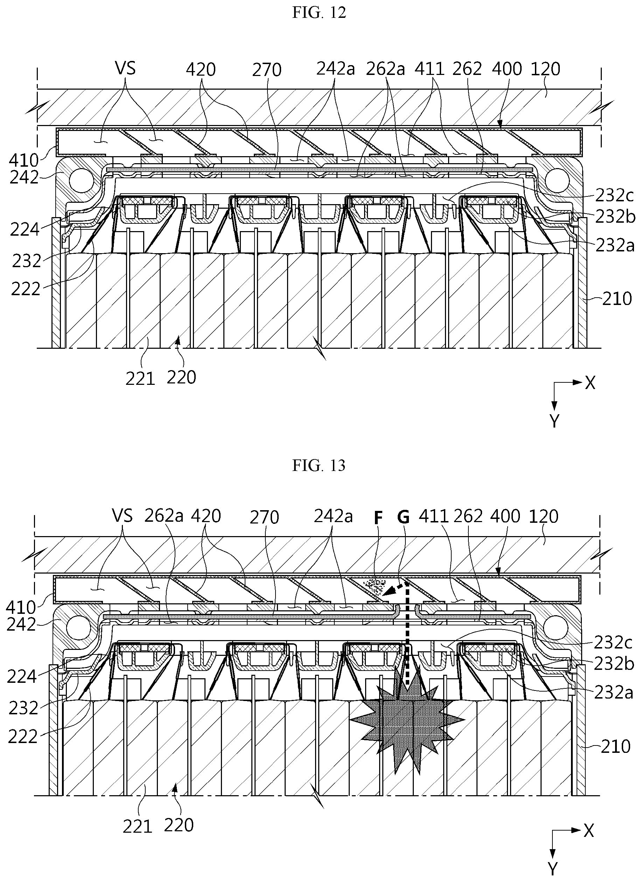

FIG. 12 is a cross-sectional view illustrating the configuration taken along line B-B' in FIG. 1. FIG. 13 is a drawing illustrating operation of the configuration in FIG. 12 when a thermal event occurs. Referring to FIGS. 12 and 13, the venting channel 400 according to an embodiment of the present disclosure may be positioned between the side wall 120 and the battery module 200. In addition, the venting channel 400 may be positioned between the side wall 120 and the rear venting channel 400.

According to this configuration of the present disclosure, when a thermal event occurs, the venting gas G and the ignitable particles F may move backward or in the -X-axis direction through the first venting hole 232c and the second venting hole 262a. The venting gas G and the ignitable particles F may rupture the fireproof sheet 270. In addition, the venting gas G and the ignitable particles F may flow into the venting space VS through the ruptured portion of the fireproof sheet 270 and the third venting hole 242a. The venting gas G and the ignitable particles F flowing into the venting space VS may collide with one or more guides 420 and the body 410 so that their energy may be reduced. As a result, the venting gas G and the ignitable particles F may be prevented from flowing into the adjacent venting space VS or battery module 200. In addition, the unruptured portion of the fireproof sheet 270 may more reliably block the venting gas G and the ignitable particles F from flowing into the battery module 200.

In addition, according to this configuration of the present disclosure, the side wall 120 forming the exterior of the battery pack may not be damaged by the venting gas G and the ignitable particles F. Therefore, even if a thermal event occurs, the exterior of the battery pack may stably maintain its shape. As a result, the ignitable particles F or the flame may not be discharged to the outside of the battery pack. In addition, the venting gas G with reduced energy and lowered temperature may be discharged to the outside of the battery pack through the venting device 500.

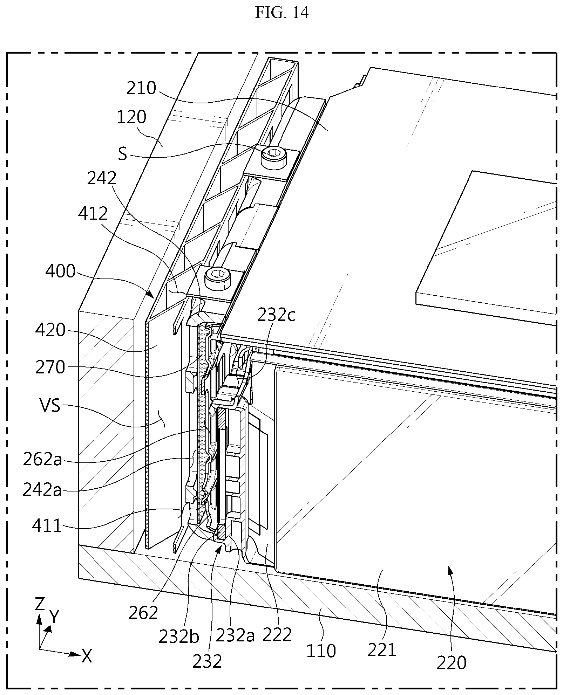

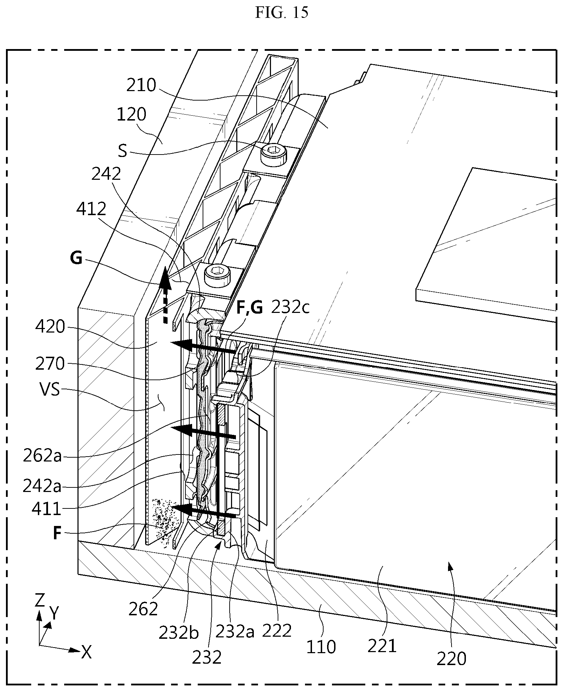

FIG. 14 is a cross-sectional view illustrating the configuration taken along line A-A' in FIG. 1. FIG. 15 is a drawing illustrating operation of the configuration in FIG. 14 when a thermal event occurs. Referring to FIGS. 14 and 15, the outlet 412 of the venting channel 400 according to an embodiment of the present disclosure may face the pack cover 150.

According to this configuration of the present disclosure, when a thermal event occurs, the venting gas G whose energy is reduced in the venting space VS may move upward or in the +Z-axis direction through the outlet 412. In addition, the venting gas G may flow between the battery module 200 and the pack cover 150 to be discharged to the outside of the battery pack through the venting device 500.

In addition, according to this configuration of the present disclosure, the pack cover 150 forming the exterior of the battery pack may not be damaged by the venting gas G and ignitable particles F. Therefore, even if a thermal event occurs, the exterior of the battery pack may stably maintain its shape.

In addition, the battery pack according to the present disclosure may further include various components of the battery pack known at the time of filing the present disclosure, such as a BMS, a bus-bar, a relay, a current sensor, or the like, in addition to the battery module,

The battery pack according to the present disclosure may be applied to a vehicle, such as an electric vehicle or a hybrid vehicle. That is, the vehicle according to the present disclosure may include the battery pack according to the present disclosure. In addition, the vehicle according to the present disclosure may further include various components included in the vehicle, in addition to the battery pack. For example, the vehicle according to the present disclosure may further include a car body, a motor, a control device such as an ECU (electronic control unit), and the like.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery pack comprising:
a case configured to provide a space therein;
a battery module positioned inside the case and comprising a rear end cover having a venting hole; and
a venting channel comprising a body configured to provide a space therein and communicating with the venting hole, and a guide positioned inside the body and facing the venting hole.

2. The battery pack according to claim 1,
wherein the guide extends in an up-down direction and configured to partition the space of the body.

3. The battery pack according to claim 2,
wherein the body comprises:
an inlet facing the venting hole; and
an outlet formed on an upper surface.

4. The battery pack according to claim 3,
wherein the case comprises a pack cover configured to cover an upper surface of the battery module, and
wherein the outlet faces the pack cover.

5. The battery pack according to claim 2,
wherein the guide is disposed to be inclined with respect to the venting hole.

6. The battery pack according to claim 1,
wherein a plurality of guides are provided, and
wherein the plurality of guides are disposed in the left-right direction.

7. The battery pack according to claim 6,
wherein the plurality of guides partition the space provided by the body into a plurality of venting spaces, and
wherein each of the plurality of venting spaces has an inlet facing the rear end cover.

8. The battery pack according to claim 6,
wherein each of the plurality of guides is disposed to be inclined with respect to the rear end cover.

9. The battery pack according to claim 8,
wherein each of the plurality of guides faces a neighboring guide.

10. The battery pack according to claim 1,
wherein the battery module further comprises a fireproof sheet positioned on the inner side of the rear end cover and configured to cover the venting hole.

11. The battery pack according to claim 1,
wherein the case comprises:
a base plate on which the battery module is installed; and
a side wall installed on the base plate, and
wherein the venting channel is disposed between the rear end cover and the side wall.

12. The battery pack according to claim 1,
wherein the venting channel is fastened to the rear end cover.

13. The battery pack according to claim 1,
wherein the battery module further comprises a power terminal protruding forward.

14. A vehicle comprising a battery pack of any one of claims 1 to 13.
